Europäisches Patentamt

European Patent Office

Office européen des brevets

(11) Publication number: **0 547 379 A2**

# EUROPEAN PATENT APPLICATION

(21) Application number: **92119466.8**

(22) Date of filing: **13.11.92**

(51) Int. Cl.⁵: **C08G 18/32**, C09J 175/02

(30) Priority: **18.12.91 US 809982**

(43) Date of publication of application:
**23.06.93 Bulletin 93/25**

(84) Designated Contracting States:
**DE FR GB NL**

(71) Applicant: **HUGHES AIRCRAFT COMPANY**
**P.O. Box 80028**
**Los Angeles, CA 90080-0028(US)**

(72) Inventor: **Hermansen, Ralph D.**
**19136 Nashville Street**
**Northridge, Calif. 91326(US)**
Inventor: **Lum, Joan L.**
**2502 West 184th Street**
**Redondo Beach, Calif. 90278(US)**
Inventor: **Sanftleben, Henry M.**
**12224 Castle Court**
**Carmel, Indiana 46033(US)**

(74) Representative: **KUHNEN, WACKER &**
**PARTNER**
**Alois-Steinecker-Strasse 22 Postfach 1553**
**W-8050 Freising (DE)**

(54) **Microencapsulated polyurea adhesives.**

㉗ A fast-curing polyurea adhesive is created by microencapsulating one of the two components (diamine or isocyanate) and embedding the microcapsules, or microspheres, in a matrix of the other (isocyanate or diamine). The adhesive may then be applied to the appropriate surface, and curing will commence only when the microspheres are ruptured, such as by bondline pressure, or are thermally degraded, such as by applied heat.

EP 0 547 379 A2

## BACKGROUND OF THE INVENTION

### 1. Field of the Invention

The present invention relates to adhesives, and, more particularly, to polyurea adhesives.

### 2. Description of Related Art

Presently-used adhesives include epoxies, acrylics, phenolics, and the like. They are usually either one-component or two-component adhesives.

The disadvantage of one-component adhesives is that reactivity must be virtually non-existent at ambient storage temperatures. Thus, very high temperatures (on the order of 300° to 600°F, or 149° to 316°C) are needed to achieve fast cures. Thermal mismatch stresses and thermal damage often result.

The disadvantage of two-component adhesives is that reactivity must be low enough to allow mixing. Thus, the reactivity is too low for fast cures.

Polyurea fast-cure adhesives, resulting from the reaction of an isocyanate and a diamine, are desirable in a number of applications, such as fast assembly of components in production. Specifically, applications for fast-curing adhesives are assembly line bonding operations where very high volumes of products are processed and speed is vital to obtaining high output; examples include automobile production and fabrication of industrial products. However, known polyurea adhesives have been largely unusable in such applications because the two components react so quickly that no "work life" exists.

Thus, a need exists for the packaging of isocyanates and diamines to produce a useful, fast-curing polyurea adhesive.

## SUMMARY OF THE INVENTION

In accordance with the invention, a fast-curing polyurea adhesive is created by micro-encapsulating one of the two components (diamine or isocyanate) and embedding the microcapsules, or microspheres, in a matrix of the other (isocyanate or diamine). The adhesive may then be applied to the appropriate surface, and curing will commence only when the microspheres are crushed, such as by bondline pressure, or are thermally degraded, such as by applied heat.

## BRIEF DESCRIPTION OF THE DRAWINGS

FIG. 1, on coordinates of adhesive shear strength (in pounds per square inch, or psi) and bondline pressure (in psi), is a plot of several compositions of encapsulated diamine in isocyanate at several different concentrations of diamine, with and without silica filler; and

FIG. 2, on coordinates of adhesive shear strength (in psi) and bondline pressure (in psi), is a plot of several compositions of encapsulated diamine in isocyanate at several different concentrations of diamine, with and without alumina filler.

## DESCRIPTION OF THE PREFERRED EMBODIMENTS

The fast-curing polyurea adhesive of the invention is formed by micro-encapsulating one of the two components (diamine or isocyanate) and embedding the microcapsules, or microspheres, in a matrix of the other (isocyanate or diamine). The adhesive may then be applied to the appropriate surface, and curing will commence only when the microspheres are crushed, such as by bondline pressure, or are thermally degraded, such as by applied heat.

With a shell microencapsulating particles of one component, the two reactants remain separated such that reaction can only occur upon rupture of the shells. This permits applying the adhesive to the bonding surface prior to any rupture. The rupturing of the microspheres may be done mechanically or thermally. As a consequence, the two components may be mixed together (as microencapsulant and matrix) and stored for long periods of time with good stability.

The implementation of this type of adhesive system significantly reduces processing (curing) time of assemblies, thereby permitting bonding significantly more assemblies during a given period of time. Further, field operations which require easy handling and quick cure are also facilitated.

The adhesive comprises two components: a diamine curing agent and an isocyanate. One of the two components is encapsulated. Preferably, the diamine is encapsulated, since it is less hazardous than the isocyanate and hence easier to encapsulate.

The isocyanate may comprise any of the well-known isocyanates, represented by the formula

$$R\text{-}(N = C = O)_2,$$

where R is an alkyl or aromatic group and n = 2 or 3.

The diamine may comprise any of the well-known diamines, represented by the formula

$$R'(NH_2)_2,$$

where R' is an alkyl or aromatic group. Secondary amines may also be employed in the practice of the invention.

Any encapsulating procedure, such as a centrifugal extrusion method, may be employed to encapsulate the isocyanate or diamine. Such encapsulating procedures are already known and are conventional in the microencapsulating art, and thus do not form a part of this invention.

The material to be microencapsulated should be of a viscosity such that it can be microencapsulated. If the diamine curing agent is encapsulated, its viscosity should not exceed 300 centipoise (cp) at the temperature of use; higher viscosities would prevent proper mixing and hence reaction.

Within the foregoing constraints of ability to be encapsulated and viscosity, any of the isocyanates and diamines may be employed in the practice of the invention. The particular combination selected affects the properties of the resultant adhesive, as is well-known.

The ratio of isocyanate to diamine depends on the equivalent weight functionality; each isocyanate group requires one -NH$_2$ group. Accordingly, it will be apparent that each combination of isocyanate and diamine requires a particular combination of amount of each component. However, the determination of the appropriate amounts of each component to provide a stoichiometric mixture is well within the skill of the artisan.

Since one of the components is encapsulated, however, it is possible that rupture of all the microspheres may not occur. To account for less than 100% rupture, an excess of the encapsulated material, up to about 30% over calculated stoichiometry (depending on the size of the microspheres) may be employed in the practice of the invention.

Each component should be compatible with the microencapsulant shell material to the extent that the components can be combined in the proper mix ratio and stored for a long period of time, say up to one year, without reacting.

The shell material may comprise any of the common microencapsulants, such as waxes and polymers. These materials are well-known in the art and do not form a part of this invention. However, inasmuch as waxes tend to degrade adhesive properties, a more structure-oriented material is preferred for the shell material. Examples of such structure-oriented materials include acrylic polymers, polyvinyl acetates, ethylene vinyl acetates, styrene-acrylic polymers, polystyrenes, and polyvinylidene chlorides. The particular shell material selected affects the shelf-life of the material and controls the release mechanism involved in crushing or melting the microcapsules.

Alternatively, one could form a polyurea shell employing the isocyanate or diamine itself by allowing droplets of one to fall through a mist of the other. The reaction is self-limiting, and would form a polyurea shell around the droplets.

The size of the filled microspheres may range from about 150 to 500 micrometers ($\mu$m). Preferably, they are sieved to a substantially uniform size, which, for the purposes of this invention, is defined as about ±25% of a nominal particle size. Such a substantially uniform size provides a repeatable range for production, and also ensures that substantially all the microspheres are ruptured at about the same time to enhance mixing and reaction.

It is desirable that the particle size be toward the large end of the range, as the smaller particle sizes do not rupture as easily as the larger sizes, at least under pressure.

When the reaction is desired, the proper release mechanism (pressure or temperature) instigates an extremely fast cure by rupturing the shell.

In the case of pressure, an applied pressure to the materials being bonded of about 15 to 100 pounds per square inch (psi) (about 1,050 to 7,030 grams per square centimeter) is sufficient to ensure substantially total rupture of the microspheres.

In the case of temperature, an applied temperature to the materials being bonded of about 120° to 160°F (about 49° to 71°C) is sufficient to ensure substantially total rupture of the microspheres.

Once the microspheres are ruptured, the reaction time for bonding to occur is about 30 seconds to 1 minute.

Materials that may be bonded together by the polyurea adhesive of the invention include aluminum to aluminum, various plastics, and epoxy-coated aluminum. That is, materials that are presently commonly bonded with polyurea adhesives may be also bonded by the adhesive disclosed herein.

The adhesive is easily applied to one surface of a material to be bonded, such as by means of a syringe or spatula. In some cases, it might be desirable to apply the adhesive to both surfaces. In any event, the curing is achieved either by pressing the two surfaces to be bonded, employing a pressure as described above, or by applying heat as described above to the bond area, with the two surfaces under clamping pressure.

A filler may be incorporated in the combination of microspheres embedded in the matrix. Fillers are well-known for their use in conjunction with polyurea adhesives, and include alumina ($Al_2O_3$) to impart thermal conductivity and strength to the adhesive and silica ($SiO_2$) as a thixotropic agent. Other commonly-used fillers may also be employed in the practice of the invention as an aid to modifying the adhesive properties.

In the case of $Al_2O_3$, up to about 200 wt% of the total composition may be incorporated in the adhesive; in the case of $SiO_2$, up to about 10 wt% of the total composition may be incorporated. The desired amount of other fillers is easily determined according to end use.

Various diamine and isocyanate combinations have been tested and have demonstrated the high cure speed obtained by the inventive approach. Without use of the microsphere encapsulation, reaction times have been so fast as to prevent adequate dispersal of the reactions. Yet, using a diamine encapsulated in a paraffin wax (melting point 150°F, or 66°C) and dispersing the microspheres in an isocyanate resulted in no reaction until the adhesive was exposed to 160°F (71°C) for five minutes under clamping pressure. The adhesive bonded two clean aluminum plates.

The adhesive of the invention is expected to find extensive use in high speed manufacturing applications, where there is a need for a fast cure. The adhesive of the invention provides such a fast cure, on the order of seconds, yet, since the components are separated until application of temperature and pressure, there is no sacrifice in work life to apply the adhesive to the part to be bonded.

It will be appreciated that the adhesive after curing may be elastomeric, rigid, or a combination, depending on the starting reactants. The tailoring of the structural aspects of the polyurea is well-known, and does not form a part of this invention. Specifically, the urea linkages are very polar and contribute to high adhesion. If R' in the diamine is long, then elastomeric properties are obtained; if R' is aromatic, then rigid properties are obtained. Varying R' thus permits tailoring of these effects.

EXAMPLES

The isocyanate and diamine components were selected so that the resultant material could be applied as a paste. Initially, high equivalent weight isocyanate was selected to reduce the amount of microencapsulated curing agent necessary. Viscosity of the diamine was selected to be low for ease of microencapsulation. Table I lists the materials selected.

| Table I. Materials Selected. | | |
|---|---|---|
| **Material used** | **Viscosity (cp at R.T.)** | **Equivalent weight** |
| Isocyanate: | | |
| 143L | 30 | 144 |
| DDI-1410 | 130 | 300 |
| N3200 | 3000 | 181 |

4

Diamine:

| | | |
|---|---|---|
| MXDA | 10 | 34 |
| PACM-20 | 20 | 52.5 |

Notes: 143L = an aliphatic isocyanate, available from Dow Chemical (Midland, MI).

DDI-1410 = an aliphatic diisocyanate, available from Henkel Corp. (Minneapolis, MN).

N3200 = an aliphatic polyisocyanate, available from Mobay Corp. (Pittsburgh, PA).

MXDA = meta-xylenediamine, available from Mitsubishi Gas Chemical Co.

PACM-20 = methylene di(cyclohexylamine), available from Air Products Chemical (Allentown, PA).

====================================================================

The diamines were microencapsulated in one of three shell materials, using the centrifugal extrusion method, operating at the rotation indicated in Table II, below. The following nozzles sizes were used: inner-0.013 in. (0.033 cm); outer-0.025 in. (0.064 cm); spacer-0.010 in. (0.025 cm). The data on encapsulated curing agents is set forth in Table II.

====================================================================

## Table II. Data on Encapsulated Curing Agents.

| Run No. | Shell Formulation | Fill | Theoretical Payload | Wt. (g) |
|---|---|---|---|---|
| 1 | 60% BOLER 1014G Wax 30% PICCOLYTE S-115 10% PARAPOL 2500 | PACM | 50%[a] | 40 |
| 2 | 70% BOLER 1014G Wax 20% PICCOLYTE S-115 10% PARAPOL 2500 | PACM | 50%[a] | 60 |
| 3 | POLYWAX 500 | PACM | 50%[a] | 10 |
| 4 | POLYWAX 500 | MXDA | 50%[b] | 25 |

| | | | | |
|---|---|---|---|---|
| 5 | 60% BOLER 1014G Wax<br>30% PICCOLYTE S-115<br>10% PARAPOL 2500 | MXDA | 50%[b] | 43 |
| 6 | 70% BOLER 1014G Wax<br>20% PICCOLYTE S-115<br>10% PARAPOL 2500 | MXDA | 50%[b] | 44 |
| 7 | 60% BOLER 1014G Wax<br>30% PICCOLYTE S-115<br>10% PARAPOL 2500 | PACM | 50%[c] | 195 |
| 8 | -do- | PACM | 71%[c] | 215 |
| 9 | -do- | MXDA | 50%[c] | 240 |
| 10 | -do- | MXDA | 71%[c] | 130 |
| 11 | 45% BOLER 1014G Wax<br>45% PICCOLYTE S-115<br>10% PARAPOL 2500 | PACM | 50%[c] | 250 |

Notes: BOLER 1014G Wax = paraffin wax, available from Boler Petroleum (Pittsburgh, PA).

PICCOLYTE S-115 = hydrocarbon resin - modified, available from Hercules, Inc. (Wilmington, DE).

PARAPOL 2500 = iso-butylene - modified, available from Exxon, Inc. (Houston, TX).

[a] rotation = 1875 rpm

[b] rotation = 2000 rpm

[c] rotation = 1950 rpm

Theoretical payload is the amount of diamine incorporated in the microcapsule. The balance is due to the microcapsule material.

======================================================================

The various formulations of isocyanates and diamines were tested for lap shear strength using cleaned aluminum coupons. Bondline pressure and elevated temperature at the bondline were varied by using a heated platen press (160°F, or 71°C). The effects of alumina (for strength) and fumed silica (for viscosity reduction and to keep the microcapsules in suspension) as fillers were also investigated. Testing was performed on the microencapsulated diamine and on the mixed adhesive system, and included determinations of microcapsule size, the diamine content in the microcapsules, lap shear, and shelf stability.

In the testing of lap shear, aluminum lap shear specimens were clad with 2024-T4 (an aluminum alloy) and scrubbed with an abrasive cleanser to a water-break-free condition. Adhesive was applied to a preheated substrate (160°F, or 71°C) on a platen press, adherend was then positioned with 1 inch overlap. Pressure was then applied by the platen press. Four to eight coupons were bonded at once in the press.

6

Shelf stability was determined by setting aside retains of successful formulations for up to one month. After this time, application properties were evaluated by the ability to apply onto substrates. Lap shear coupons were prepared with one of the retains and mechanical strength determined.

The results of the testing are as follows:

Microcapsule size was determined by scanning electron microscope. The microcapsule size ranged from about 50 to 500 μm. The microcapsule size is determined by speed settings on the centrifugal equipment and the viscosity of the capsule materials. A more uniform particle size could be obtained by sieving the materials.

Diamine content of the microcapsules was measured to be somewhat less than the theoretical loading. For example, for a theoretical loading of 50 wt%, the actual amount of diamine was found to be about 26 to 30 wt%.

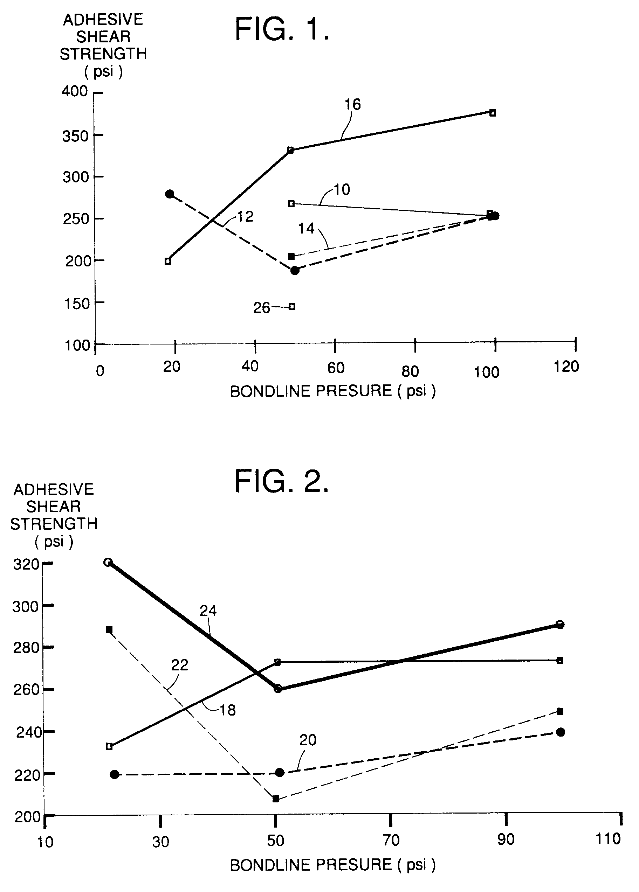

Mechanical testing of polyurea adhesive was done by room temperature lap shear tests. The effects of pressure and temperature on adhesive strength were investigated. The parameters selected for variation in this test were (1) shell material, (2) pressure, (3) filler material, and (4) excess diamine. Bondline thickness was not controlled, as this would have prevented full rupture of the microcapsules. Test results are contained in Table III and are graphically represented in FIGS. 1 and 2.

=====================================================================

Table III.  Polyurea Adhesive Lap Shear Results.

| Isocyanate | Diamine | Shell Mat'l | Bondline Press. (psi) | Filler | wt% excess diamine | Shear Strength (psi) | Std. Dev. |
|------------|---------|-------------|------------------------|--------|---------------------|----------------------|-----------|
| I-143L | MXDA | 2 | 17 | none | 0% | <100 | |
| I-143L | MXDA | 1 | 17 | none | 0% | <100 | |
| I-143L | MXDA | 3 | 17 | none | 0% | <100 | |
| I-143L | MXDA | 2 | 20 | none | 0% | <100 | |
| I-143L | MXDA | 1 | 20 | none | 0% | <100 | |
| I-143L | PACM-20 | 1 | 20 | none | 20% | <100 | |
| I-143L | PACM-20 | 1 | 20 | 2% $SiO_2$ | 20% | <100 | |
| I-143L | PACM-20 | 2 | 17 | none | 40% | <100 | |
| I-143L | PACM-20 | 1 | 17 | 50% $Al_2O_3$ | 0% | <100 | |
| I-143L | PACM-20 | 2 | 50 | 100% $Al_2O_3$ | 20% | <100 | |
| DDI 1410 | PACM-20 | 1 | 25 | 200% $Al_2O_3$ | 0% | <100 | |
| DDI 1410 | PACM-20 | 1 | 42 | 200% $Al_2O_3$ | 0% | 100 | 12.3 |
| DDI 1410 | PACM-20 | 2 | 50 | 1% $SiO_2$ | 20% | 388 | 43.8 |
| DDI 1410 | PACM-20 | 2 | 20 | none | 0% | 232 | 101 |
| DDI 1410 | PACM-20 | 2 | 50 | none | 0% | 271 | 60.8 |
| DDI 1410 | PACM-20 | 2 | 100 | none | 0% | 273 | 41.3 |
| DDI 1410 | PACM-20 | 2 | 20 | none | 10 | 219 | 50.4 |
| DDI 1410 | PACM-20 | 2 | 50 | none | 10 | 219 | 50.4 |
| DDI 1410 | PACM-20 | 2 | 100 | none | 10 | 238 | 55.9 |
| DDI 1410 | PACM-20 | 2 | 20 | 100% $Al_2O_3$ | 20 | 288 | 2.1 |
| DDI 1410 | PACM-20 | 2 | 50 | 100% $Al_2O_3$ | 20 | 208 | 41.9 |
| DDI 1410 | PACM-20 | 2 | 100 | 100% $Al_2O_3$ | 20 | 250 | 34.1 |
| DDI 1410 | PACM-20 | 2 | 20 | none | 30 | 318 | 56.7 |
| DDI 1410 | PACM-20 | 2 | 50 | none | 30 | 262 | 34.8 |
| DDI 1410 | PACM-20 | 2 | 100 | none | 30 | 285 | |

8

| | | | | | | | |
|---|---|---|---|---|---|---|---|
| N3200 | PACM-20 | 2 | 25 | 1% SiO$_2$ | 0 | <100 | |
| N3200 | PACM-20 | 1 | 25 | 1% SiO$_2$ | 0 | <100 | |
| N3200 | PACM-20 | 2 | 63 | 1% SiO$_2$ | 0 | <100 | |
| N3200 | PACM-20 | 1 | 63 | 1% SiO$_2$ | 0 | <100 | |
| N3200 | MXDA | 2 | 17 | none | 0 | 175 | |
| N3200 | MXDA | 1 | 17 | none | 0 | 122 | 18.7 |
| N3200 | MXDA | 3 | 17 | none | 0 | 117 | 5.3 |
| N3200 | MXDA | 1 | 20 | none | 20 | 321 | 28.3 |
| N3200 | MXDA | 2 | 20 | none | 20 | 284 | 17.7 |
| N3200 | MXDA | 2 | 20 | 1% SiO$_2$ | 20 | 202 | 26.2 |
| N3200 | MXDA | 2 | 50 | 1% SiO$_2$ | 20 | 334 | 33 |
| N3200 | MXDA | 2 | 100 | 1% SiO$_2$ | 20 | 384 | 85 |
| N3200 | MXDA | 2 | 50 | none | 20 | 189[4] | 21 |
| N3200 | MXDA | 2 | 100 | none | 20 | 251[4] | 92.6 |
| N3200 | MXDA | 2 | 100 | none | 30 | 243 | 9 |
| N3200 | MXDA | 2 | 50 | none | 10 | 259 | 22.8 |
| N3200 | MXDA | 2 | 100 | none | 10 | 248 | 5.2 |
| N3200 | MXDA | 2 | 50 | none | 30 | 211 | 17.1 |

PBT substrate:

| | | | | | | | |
|---|---|---|---|---|---|---|---|
| N3200 | MXDA | 2 | 50 | none | 30 | 129 | 39 |

Notes: 1: Shell material = 60% BOLER 1014G wax, 30% PICCOLYTE S115, 10% PARAPOL 2500.

2: Shell material = 70% BOLER 1014G wax, 20% PICCOLYTE S115, 10% EPOLENE C-16.

3: Shell material = POLYWAX 500.

4: Adhesive was applied after one month shelf storage.

=====================================================================================

Fumed silica filler (AEROSIL R972, available from De-Gussa Co., Frankfurt, Germany) was added to improve the application properties and also reduce settling of the microcapsules in low viscosity isocyanate. Alumina was added to improve strength and facilitate rupture of the microcapsules. These additives somewhat affected the strength of the adhesives, as is illustrated in FIGS. 1 and 2. The fumed silica also thickened the mixtures sufficiently for application and reduced settling of the microcapsules.

FIG. 1 depicts the polyurea adhesive strength results using N3200 isocyanate and MXDA diamine at 10% excess amine (Curve 10), 20% excess amine (Curve 12), 30% excess amine (Curve 14), and 20% excess amine plus 1 wt% SiO$_2$ (AEROSIL fumed silica) (Curve 16). The addition of silica to this formulation appears to increase shear strength of the adhesive.

FIG. 2 depicts the polyurea adhesive strength results using DDI 1410 isocyanate and PACM-20 diamine at 0% excess amine (Curve 18), 10% excess amine (Curve 20), 20% excess amine plus 100 wt% alumina (Curve 22), and 30% excess amine (Curve 24). The addition of excess amine curing agent (in excess of stoichiometric ratio) appears to generally increase strength, especially under low bondline pressure.

The data includes one set of specimens prepared on solvent-cleaned polybutylene teraphthalate (PBT) substrate (see also FIG. 1, Point **26**). The strength is about 40% lower on PBT than on aluminum (under similar bonding conditions). The more stringent cleaning procedures on the aluminum is believed to account for this difference (primarily cohesive failures were noted on all aluminum test coupons, adhesive failure in some of the PBT coupons).

Shelf stability tests showed that one of the shell materials (POLYWAX 500) was found to have decreased shelf stability, as retains could not be applied after storage for one month. Shear strength values on one month old material (see Table III) did not show significant degradation.

Thus, there have been disclosed microencapsulated polyurea adhesives. It will be clear to those skilled in the art that various changes and modifications of an obvious nature may be made, and all such changes and modifications are considered to fall within the scope of the invention, as defined by the appended claims.

## Claims

1. A polyurea adhesive comprising as components an isocyanate and a diamine, wherein the improvement comprises microspheres comprising an encapsulant material encapsulating one of said components, wherein said microspheres are embedded in a matrix of another of said components.

2. The polyurea adhesive of Claim 1 wherein said microspheres encapsulate said diamine and said matrix comprises and isocyanate.

3. The polyurea adhesive of Claim 1 wherein said microspheres have a substantially uniform particle size, ranging from about 150 to 500 micrometers.

4. The polyurea adhesive of Claim 1 wherein said microspheres comprise a material rupturable by pressure or heat.

5. The polyurea adhesive of Claim 4 wherein said pressure ranges from about 15 to 100 pounds per square inch (about 1,050 to 7,030 grams per square centimeter).

6. The polyurea adhesive of Claim 4 wherein said heat ranges from about 120° to 160°F (about 49° to 71°C).

7. The polyurea adhesive of Claim 1 further including a filler.

8. The polyurea adhesive of Claim 7 wherein said filler is selected from alumina or silica.

9. A method of bonding two materials together, comprising applying an adhesive to a surface of at least one of said two materials and bringing said surfaces of said two materials together to be bonded, wherein the improvement comprises employing as said adhesive a polyurea adhesive comprising as components an isocyanate and a diamine, with one of said components encapsulated in an encapsulant material to form microspheres, which are embedded in a matrix of another of said components, bringing said two surfaces together, and applying at least one of pressure and heat to said two materials sufficient to rupture substantially all of said microspheres.

FIG. 1.

FIG. 2.